# EUROPEAN PATENT APPLICATION

(11) **EP 3 700 051 A1**
(43) Date of publication of application: **26.08.2020**
(21) Application number: 20158811.8
(22) Date of filing: 21.02.2020
(51) Int. Cl.: H02J 7/00, H02J 7/34, H02J 50/10, A47L 11/40, A46B 5/00, A46B 13/00, A46B 13/02

(54) **COMPACT SCRUBBER**

(30) Priority: 22.02.2019 US 201962809194 P
(71) Applicant: Techtronic Cordless GP, Anderson, SC 29621 (US)
(72) Inventor: The designation of the inventor has not yet been filed
(74) Representative: Williams, Annabel

(57) **Abstract**

A charging station (18) for charging a power tool such as a scrubber (14), a scrubber for cleaning a surface, and a scrubber assembly. The charging station includes a battery topper (70) and a battery (74). The battery topper includes a recessed portion (66) for receiving at least part of the power tool, at least one terminal, and at least one induction coil disposed within the battery topper. The battery is removably coupled to the battery topper for inducing a current in the at least one induction coil. The power tool is arranged to interact with the terminal to supply stored power from the at least one induction coil to a rechargeable battery in the power tool.

## Description

### TECHNICAL FIELD

The present invention relates to power tools, and more particularly to scrubbers. The present invention also relates to a charging station for charging a power tool. The present invention also relates to a scrubber assembly.

### BACKGROUND

Scrubbers may be used to clean a work surface (e.g., tables, floors, etc.). Such scrubbers typically include a cable that extends from the scrubber that is operable to electrically couple to a source of power (e.g., a power outlet). When the cable is coupled to the source of power, a head of the scrubber may be rotated such that debris disposed on the work surface is agitated.

### SUMMARY

The present invention provides, in a first aspect, a charging station for charging a power tool. The charging station includes a battery topper and a battery. The battery topper includes a recessed portion for receiving at least part of the power tool, at least one terminal, and at least one induction coil that may be disposed within the battery topper. The battery may be removably coupled to the battery topper for inducing a current in the at least one induction coil. The power tool may interact with the terminal to supply stored power from the at least one induction coil, to a rechargeable battery in the power tool.

In one embodiment of the first aspect, the battery topper may include a magnet for attracting the power tool to the recessed portion.

In one embodiment of the first aspect, the battery topper may include a column portion for the power tool to rest thereon.

In one embodiment of the first aspect, the charging station may further include a power indicator device configured to indicate a battery power level.

In one embodiment of the first aspect, the power tool may be a scrubber.

In one embodiment of the first aspect, the battery may be configured to supply power to one or more additional power tools.

The present invention provides, in a second aspect, a scrubber for cleaning a surface. The scrubber includes a housing, a rechargeable battery, a button, an attachment portion, and an accessory head. The button is disposed on the housing. The attachment portion is disposed at one end of the housing. The accessory head is coupled to the attachment portion and is configured to actuate in response to actuation of the button. The accessory head is detachable from the attachment portion. The rechargeable battery is arranged to be wirelessly charged when in proximity to a source of stored power.

In one embodiment of the second aspect, the accessory head may be detachable via a quick-release mechanism that is triggered in response to moving the accessory head respective to the housing.

In one embodiment of the second aspect, the attachment portion may be arranged to receive a plurality of different accessory heads.

In one embodiment of the second aspect, the scrubber may further include a power indicator device configured to indicate a battery power level.

In one embodiment of the second aspect, the scrubber may further include a terminal disposed on the housing.

In one embodiment of the second aspect, the terminal may be configured to sit in a charging station to charge the rechargeable battery.

In one embodiment of the second aspect, the scrubber may further include a splash guard disposed between the attachment portion and the accessory head.

In one embodiment of the second aspect, the housing may define a handle portion that is angled relative to the attachment portion.

The present invention provides, in a third aspect, a scrubber assembly. The scrubber assembly includes a scrubber for cleaning a surface and a charging station. The scrubber includes a housing, a rechargeable battery, a terminal, a button, an attachment portion, and an accessory head. The terminal is disposed on the housing. The button is disposed on the housing. The attachment portion is disposed at one end of the housing. The accessory head is coupled to the attachment portion and is configured to actuate in response to actuation of the trigger. The charging station includes a battery and a battery topper. The battery topper is arranged to selectively attach to the battery. The battery topper is configured to cooperate with the terminal of the scrubber to charge the rechargeable battery with power supplied by the battery.

In one embodiment of the third aspect, the accessory head may be detachable from the attachment portion.

In one embodiment of the third aspect, the terminal of the scrubber may be a USB plug.

In one embodiment of the third aspect, a USB port may be disposed on the recessed portion and may be configured to interact with the terminal to charge the rechargeable battery.

In one embodiment of the third aspect, the rechargeable battery may be arranged to be wirelessly charged when the terminal interacts with a terminal disposed on the battery topper.

In one embodiment of the third aspect, one of the charging station and the scrubber may include a power indicator device configured to indicate a battery power level.

Any feature(s) described herein in relation to one aspect or embodiment may be combined with any other feature(s) described herein in relation to any other aspect or embodiment, as appropriate and applicable.

### BRIEF DESCRIPTION OF THE DRAWINGS

FIG. 1 is a front view of a compact scrubber according to one embodiment.
FIG. 2 is a front view of the compact scrubber of FIG. 1 with the scrubber removed from a base.
FIG. 3 is a front perspective view of a compact scrubber according to another embodiment.
FIG. 4 is a back perspective view of the compact scrubber of FIG. 3.
FIG. 5 is a side view of the compact scrubber of FIG. 3.
FIG. 6 is a side cross sectional view of the compact scrubber shown in FIG. 5.
FIG. 7 is a perspective view of a base according to another embodiment.
FIG. 8 is a block diagram of an electrical schematic of a compact scrubber.
FIG. 9 is a perspective view of a compact scrubber according to another embodiment.

### DETAILED DESCRIPTION

Before any embodiments of the invention are explained in detail, it is to be understood that the invention is not limited in its application to the details of construction and the arrangement of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting.

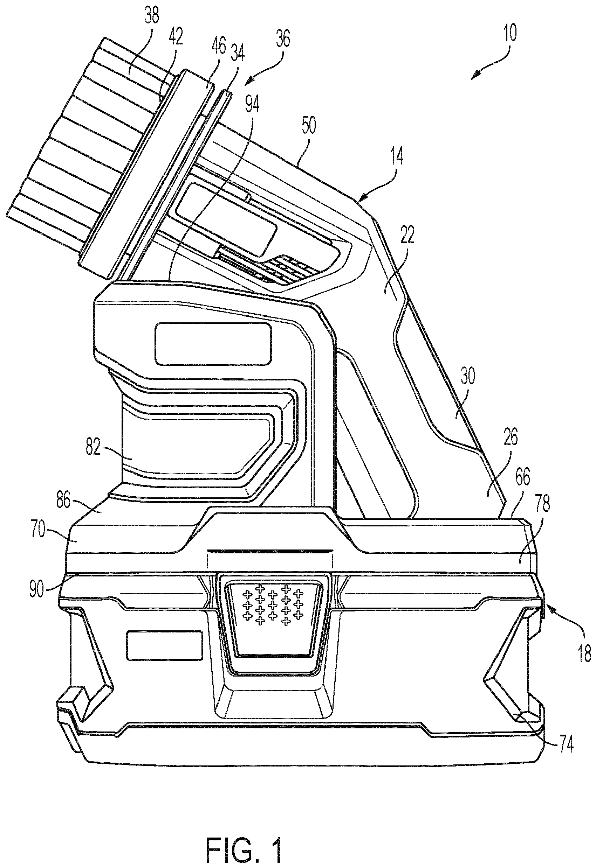

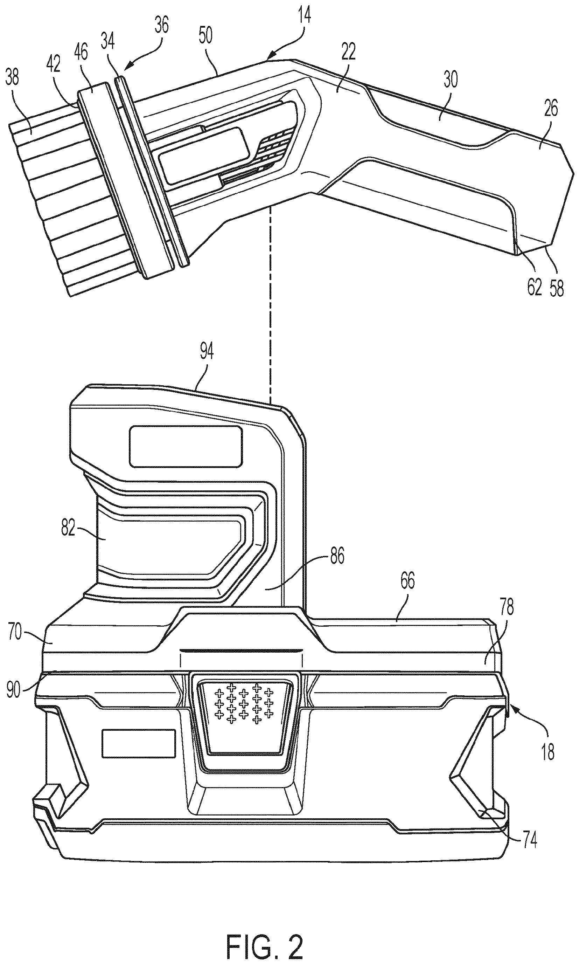

FIGS. 1 and 2 illustrate a compact scrubber assembly 10 that includes a scrubber 14 and a base, or charging station, 18. The scrubber 14 may electrically couple to the base 18 such that the scrubber 14 may be charged.

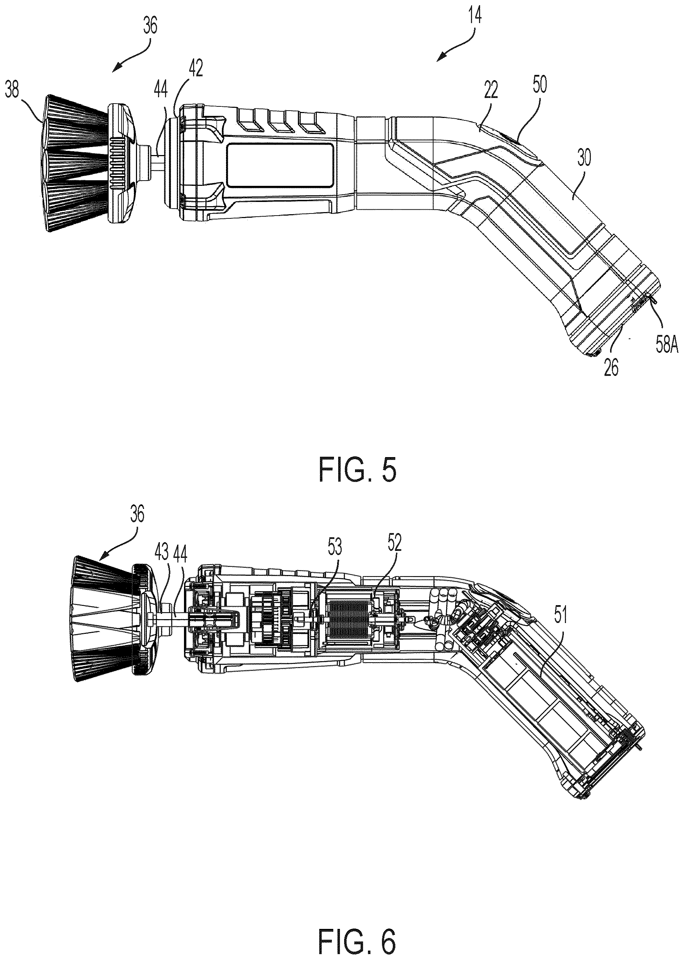

With reference to FIGS. 1-6, the scrubber 14 may include a housing 22 with a first end 26 of the housing 22 being configured as a grip portion 30. A second end 34 of the housing 22 may include an attachment portion 36 that may be configured to removably receive an accessory head 38. The grip portion 30 may be angled relative to the remainder of the housing 22, and in particular the attachment portion 36. The accessory head 38 may include bristles, a sponge, a cloth, a pad, and/or or the like coupled to a plate 42. The plate 42 may include an interface in the form of an aperture 43 that may receive a rotatable shaft 44 (shown in FIGS. 5 and 6), such that the plate 42 is coupled to the attachment portion 36. The aperture 43 may be substantially hexagonal in shape. The rotatable shaft 44 of the attachment portion 36 may be of a corresponding substantially hexagonal shape to that of the interface. In other embodiments, the shapes of the interface and the attachment portion 36 may be of a different geometry (e.g., circular, octagonal, etc.).

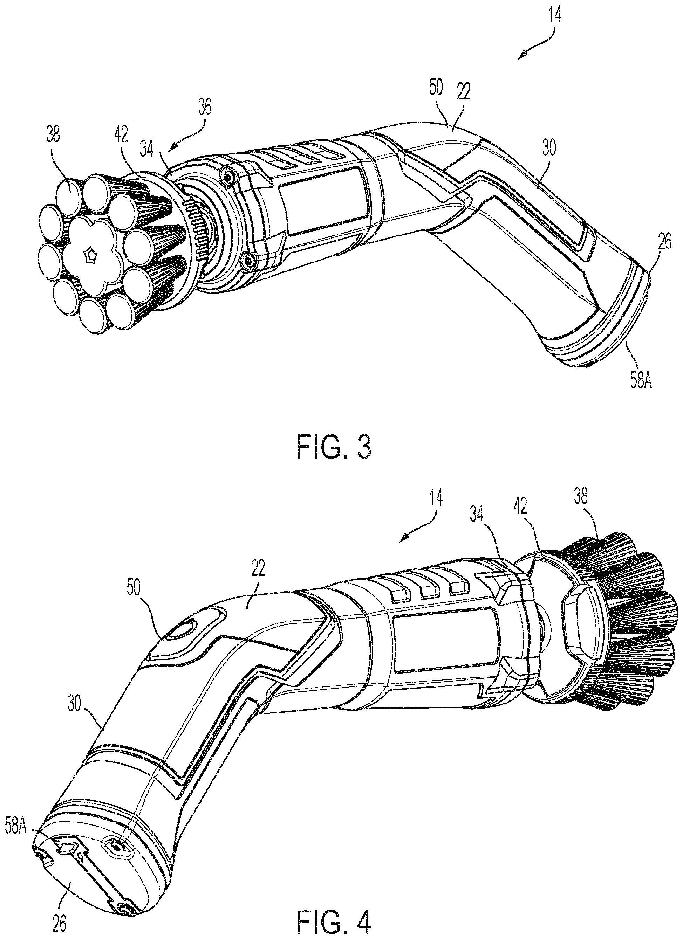

A splash guard 46 may be disposed between the attachment portion 36 and the accessory head 38. The accessory head 38 may be configured for quick release from the splash guard 46 and the housing 22 through actuation of the splash guard 46 (e.g., via pushing, pulling, rotating the splash guard 46) respective to the housing 22, actuation of a button 50 (shown in FIG. 4) that may be located on the housing 22, a combination thereof, and/or the like. In other embodiments, the splash guard 46 may be removable along with the accessory head 38. In some embodiments, actuating the splash guard 46 and/or the button 50 may cause a quick release mechanism to automatically release (e.g., eject) the accessory head 38. Such a quick release mechanism may include, for example, a spring-loaded release mechanism, a quick release coupler, and/or the like.

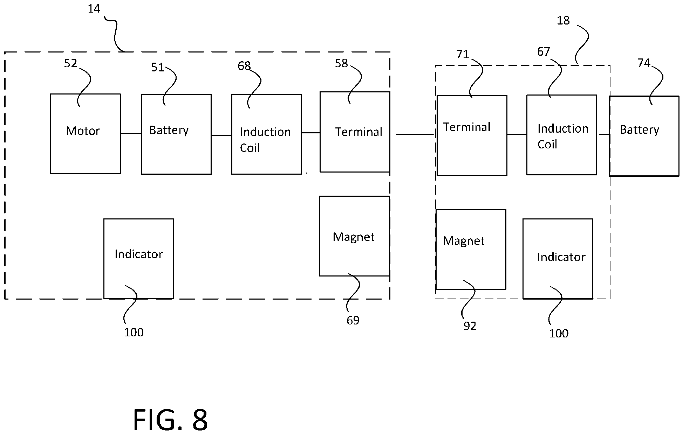

With reference to FIGS. 6 and 8, within the housing 22, the scrubber 14 may include a rechargeable battery 51 and a motor 52 powering a rotatable shaft 53. The shaft 53 may be coupled to the attachment portion 36 such that, when the accessory head 38 is coupled to the scrubber 14, the accessory head 38 rotates with the shaft 53. The splash guard 46 may be coupled to the shaft 53 such that the splash guard 46 rotates with the shaft 53 as well. To supply power from the rechargeable battery 51 to the motor 52, the button 50 may be actuated. In other embodiments, the motor 52 may be powered through a switch, a trigger, a button, and/or the like.

Upon release of one accessory head 38 from the housing 22, another accessory head 38 may be coupled to the housing 22. In some embodiments, the additional accessory head 38 may be coupled to the housing 22 by way of inserting the interface of the plate 42 onto the attachment portion 36 of the housing 22. The button 50 may be actuated to supply power from the rechargeable battery 51 to the motor 52 and, thus, move (e.g., oscillate, rotate, and/or the like) the shaft 44 and the accessory head 38. The user may hold the grip portion 30 and direct the accessory head 38 onto a work surface, cleaning the work surface of debris. The work surface to be cleaned by the scrubber 14 may be an indoor surface (e.g., tile, grout, etc.) or an outdoor surface (e.g., grills, deck, etc.).

In some embodiments, an operating parameter exhibited by the scrubber 14 may be altered based on a user's interaction with the device. For example, the scrubber 14 may employ a "push-to-scrub" feature by which an operating speed (e.g., a speed of rotation, a speed of oscillation, and/or the like) of the scrubber 14 may increase in response to the user pushing down the scrubber during cleaning and, thus, exerting more force on the scrubber 14 as it cleans a surface. In this way, the scrubber 14 may be caused to implement various operational speeds, intensities, movements, and/or the like based on various user interactions. In some embodiments, the scrubber 14 employs one or more processor and/or memory components (not shown) by which the scrubber 14 may be caused to implement various actions and/or operational parameters based on such user interaction.

The scrubber 14 may further include a terminal 58 (shown in FIGS. 2 and 8) that may be disposed at an edge 62 of the first end 26 for mating the scrubber 14 with the base 18 and to facilitate inductive charging of the rechargeable battery 51 within the scrubber 14. The edge 62 of the scrubber 14 may be angled such that the terminal 58 may sit within a recessed portion 66 of the base 18, allowing an induction coil 67 housed below the recessed portion 66 to transfer energy to an additional induction coil 68 housed just above the terminal 58 of the scrubber 14, thereby charging the scrubber 14. A magnet 69 may be disposed within the housing 22 near the terminal 58 to facilitate improved mating and/or retention of the scrubber 14 and the base 18.

In some embodiments, the terminal 58 may include one or more electrically conductive charging terminals that extend or protrude from the housing 22. The conductive terminals may electrically communicate with the rechargeable battery 51 in the housing 22 and one or more conductive terminals 71 disposed on the charging station 18. The conductive terminals 71 disposed on the charging station 18 may conductively communicate with a battery 74. In this way, the rechargeable battery 51 of the scrubber 14 may be conductively charged upon contact of the scrubber terminals 58 to the terminals 71 on the charging station 18.

With reference to FIGS. 3-6, an alternative terminal 58A is depicted. The terminal 58A may be a USB plug that may interact with a USB port that is disposed on a charging station 18. In some embodiments, the scrubber terminal 58A may interact with a USB port disposed at an alternative location (e.g., a USB port on a wall outlet, a USB port on a computer, or the like). In other embodiments, the scrubber terminal 58A may be defined as a different type of plug such as a lightning plug, a wall plug, or the like.

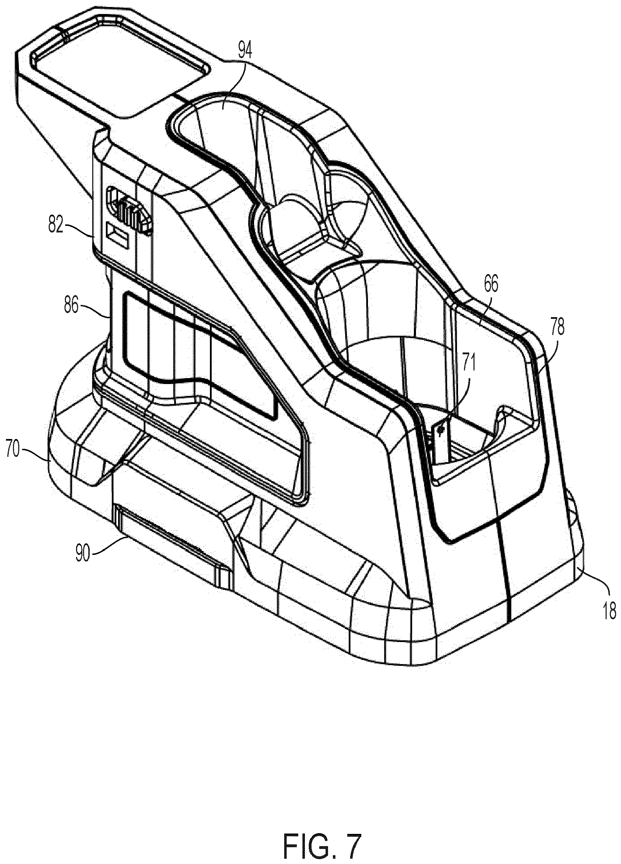

With reference to FIGS. 1, 2, and 7-8, the base 18 may include a battery topper or adaptor 70 and a battery 74 removably coupled to the battery topper 70. The battery topper 70 may include the recessed portion 66 including terminals 71 on a first side 78, and a column portion 82 on a second side 86. The battery 74 engages a bottom 90 of the topper 70 such that the induction coil housed below the recessed portion 66 may receive power from the battery 74. The battery 74 may be an 18 Volt battery, or the like. The battery 74 may be a removable battery that may additionally be disposed in power tools (e.g., a powered fastener driver, a nailer, or the like). In this way, the battery 74 may be used to power both a power tool and the charging station 18.

Additionally, a magnet 92 of an opposite pole to that of the magnet 69 disposed within the scrubber 14 may be disposed within the battery topper 70 below the recessed portion 66 to magnetically attract the terminal 58 to the terminals 71 in the recessed portion 66. The column portion 82 may provide a surface 94 for the scrubber 14 to rest thereon when the terminal 58 is mated with and/or cradled by the recessed portion 66.

In use, when the rechargeable battery 51 within the scrubber 14 is depleted of power, the user may place the terminal 58 of the scrubber 14 within the recessed portion 66 of the base 18 such that the terminal 58 mates with the terminal 71. In some embodiments, the terminal 58 may solely be placed proximate the terminal 71, rather than terminal 58 mating with the terminal 71. The remainder of the housing 22 may lean against the column portion 82 of the base 18, preventing the scrubber 14 from falling and interrupting the mating connection between the terminal 58 and the base 18. During the time in which the terminal 58 interacts with the recessed section 66, the induction coil 67 of the base 18 may draw power from the battery 74, creating an electromagnetic field. In other words, the battery 74 powers the battery topper 70. The electromagnetic field may induce a current in the induction coil 68 within the scrubber 14. This current supplies power, and subsequently charges, the rechargeable battery 51 within the scrubber 14. After the rechargeable battery 51 has been adequately charged, the user may remove the scrubber 14 from the base 18. Under normal conditions, the rechargeable battery 51 may be operable to power the scrubber 14 for approximately four hours without having to return to the base 18 for subsequent charging. In other embodiments, charging the rechargeable battery 51 to its maximum capacity may provide greater than or less than four hours of operable power.

In some embodiments, the scrubber 14 and/or the charging station 18 may include a power/charge indicator device 100 (shown in FIG. 8). For example, the scrubber 14 and/or the charging station 18 may include one or more visual signaling devices (e.g., lights, LEDs, displays, characters, symbols and/or the like), audio signaling devices (e.g., speakers, alarms, and/or the like), and/or signaling scheme or indicia (e.g., multiple lights, a scale, bars, and/or the like) configured to alert a user when the rechargeable battery 51 of the scrubber 14 is depleted, expiring, and/or should be recharged. In some embodiments, the indicator device 100 may alert the user when a battery power level threshold is satisfied. The indicator device 100 may be used to generally indicate that the rechargeable battery 51 of the scrubber 14 should be recharged or the indicator device 100 may display an estimated amount of battery lifetime (e.g., in percent, in minutes, in hours, and/or the like) left. Similarly, in some embodiments, the scrubber 14 and/or the charging station 18 may include a charging indicator device that visually or audibly indicates when the scrubber 14 is charging. For example, the scrubber 14 may include a light that blinks or glows when the battery 51 is being charged, and/or the like.

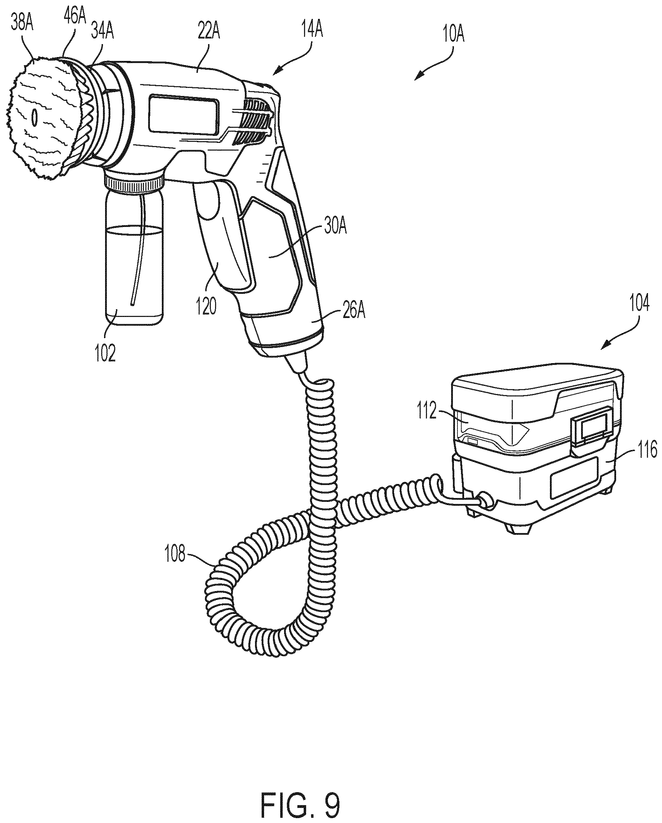

With reference to FIG. 9, a scrubber assembly 10A is depicted according to another embodiment of the invention. The scrubber assembly 10A is similar to the scrubber assembly 10 and, as such, like components will have the same reference numeral with an additional 'A'. Similar to the scrubber assembly 10, the scrubber assembly 10A may include a scrubber 14A including a housing 22A with a first end 26A being configured as a grip portion 30A. A second end 34A of the housing 22A may include an attachment portion (not shown) that may be configured to removably receive an accessory head 38A. A splash guard 46A may be disposed between the accessory head 38A and the attachment portion. The scrubber assembly 10A differs from the scrubber assembly 10 in that the scrubber assembly 10A may include a container 102 holding a liquid (e.g., water, soap, cleaning solvent, etc.). The container 102 may communicate with the accessory head 38A to disperse liquid onto a work surface as the scrubber 14A cleans the work surface.

In addition, the scrubber assembly 10A differs from the scrubber assembly 10 in that the scrubber 14A may be coupled to a power source 104 via a cord or tether 108. The cord 108 may electrically couple a battery 112 housed within a battery housing 116 to the scrubber 14A such that, when a button 120 is actuated, the battery supplies power to a motor (not shown) within the housing 22A, rotating a shaft (not shown) coupled to the motor and, thus, rotating the accessory head 38A. The battery housing 116 may be sealed to provide a water-resistant and/or water-proof case for storing the battery 112. Further, the battery housing 116 may include a clip (not shown) to facilitate portability of the scrubber assembly 10A.

In operation, a user may actuate the button 120, providing power to the motor and, thus, rotating the accessory head 38A. The user may orient the accessory head 38A such that the accessory head 38A is in contact with a work surface. The user may disperse liquid held within the container 102 to provide additional cleaning to the work surface. The clip of the battery housing 116 may be attached onto the user (e.g., a user's belt, pocket, and/or the like) to allow the user to transport the scrubber assembly 10A to various locations.

Although the invention has been described in detail with reference to certain preferred embodiments, variations and modifications exist within the scope of one or more independent aspects of the invention as described.

## Claims

1. A charging station for charging a power tool, the charging station comprising:
a battery topper including a recessed portion for receiving at least part of the power tool, at least one terminal, and at least one induction coil disposed within the battery topper; and
a battery arranged to be removably coupled to the battery topper for inducing a current in the at least one induction coil;
wherein the power tool is arranged to interact with the terminal to supply stored power from the at least one induction coil to a rechargeable battery in the power tool.

2. The charging station of claim 1, wherein the battery topper includes a magnet for attracting the power tool to the recessed portion,
and optionally wherein the battery topper includes a column portion for the power tool to rest thereon.

3. The charging station of claim 1 or 2, further comprising a power indicator device configured to indicate a battery power level.

4. The charging station of any one of claims 1 to 3, wherein the power tool is a scrubber.

5. The charging station of any one of claims 1 to 4, wherein the battery is configured to supply power to one or more additional power tools.

6. A scrubber for cleaning a surface, the scrubber comprising:
a housing;
a rechargeable battery;
a button disposed on the housing;
an attachment portion disposed at one end of the housing; and
an accessory head coupled to the attachment portion and configured to actuate in response to actuation of the trigger,
wherein the accessory head is detachable from the attachment portion; and
wherein the rechargeable battery is arranged to be wirelessly charged when in proximity to a source of stored power.

7. The scrubber of claim 6,
wherein the accessory head is detachable via a quick-release mechanism that is triggered in response to moving the accessory head respective to the housing; and/or
wherein the attachment portion may receive a plurality of different accessory heads.

8. The scrubber of claim 6 or 7, further comprising a power indicator device configured to indicate a battery power level.

9. The scrubber of any one of claims 6 to 8, further comprising a terminal disposed on the housing,
and optionally wherein the terminal is configured to sit in a charging station to charge the rechargeable battery.

10. The scrubber of any one of claims 6 to 9, further comprising a splash guard disposed between the attachment portion and the accessory head.

11. The scrubber of any one of claims 6 to 10, wherein the housing defines a handle portion that is angled relative to the attachment portion.

12. A scrubber assembly comprising:
a scrubber for cleaning a surface, the scrubber including
a housing,
a rechargeable battery,
a terminal disposed on the housing,
a button disposed on the housing,
an attachment portion disposed at one end of the housing, and
an accessory head coupled to the attachment portion and configured to actuate in response to actuation of the button;
a charging station including
a battery, and
a battery topper for selectively attaching the battery, the battery topper being configured to cooperate with the terminal of the scrubber to charge the rechargeable battery with power supplied by the battery.

13. The scrubber assembly of claim 12, wherein the accessory head is detachable from the attachment portion.

14. The scrubber assembly of claim 12 or 13, wherein the terminal of the scrubber is a USB plug, and optionally wherein a USB port is disposed on the recessed portion and is configured to interact with the terminal to charge the rechargeable battery.

15. The scrubber assembly of any one of claims 12 to 14,
wherein the rechargeable battery is arranged to be wirelessly charged when the terminal interacts with a terminal disposed on the battery topper; and/or
wherein one of the charging station and the scrubber includes a power indicator device configured to indicate a battery power level.
